# EUROPÄISCHE PATENTSCHRIFT

(11) **EP 3 444 066 B1**
(45) Veröffentlichungstag und Bekanntmachung des Hinweises auf die Patenterteilung: **17.06.2020**
(21) Anmeldenummer: 18187626.9
(22) Anmeldetag: 07.08.2018
(51) Int. Cl.: B23B 31/30

(54) **VORRICHTUNG ZUR AUFNAHME EINES RING- ODER SCHEIBENFÖRMIGEN WERKSTÜCKS AUF EINER WERKZEUGMASCHINE**
DEVICE FOR HOLDING AN ANNULAR OR DISK-SHAPED WORKPIECE ON A MACHINE TOOL
DISPOSITIF DE RÉCEPTION D'UNE PIÈCE À USINER EN FORME D'ANNEAU OU DE DISQUE SUR UNE MACHINE-OUTIL

(30) Priorität: 10.08.2017 DE 102017007527
(43) Veröffentlichungstag der Anmeldung: 20.02.2019
(73) Patentinhaber: Kapp Werkzeugmaschinen GmbH, 96450 Coburg (DE); NILES Werkzeugmaschinen GmbH, 12681 Berlin (DE)
(72) Erfinder: SCHMIDT, Matthias, 89192 Rammingen (DE); STEGNER, Achim, 96450 Coburg (DE); Schneider, Stefan, 96515 Sonneberg (DE)
(74) Vertreter: Gosdin, Michael

(56) Entgegenhaltungen:
- EP-A1- 0 862 960
- DE-B- 1 048 108
- DE-C- 645 770
- DE-U1-202006 015 097
- US-A1- 2008 157 487

## Beschreibung

Die Erfindung betrifft eine Vorrichtung zur Aufnahme eines ring- oder scheibenförmigen Werkstücks auf einer Werkzeugmaschine.

Werkstücke der genannten Art werden beispielsweise in Zykloiden-Getrieben benötigt; es handelt sich dabei insbesondere um sogenannte Bolzenringe (auch "Needle-Rings" genannt). Derartige Werkstücke weisen eine Profilierung auf, die abhängig vom Verwendungszweck gegebenenfalls präzise hartfeinzubearbeiten ist. Darüber hinaus sind auch zylindrische Flächen sowie Planflächen vorhanden, die gleichermaßen genau bearbeitet werden müssen. Die geforderten Toleranzen liegen hierbei häufig in einem Bereich, der ein Umspannen des Werkstücks, zwecks Bearbeitung auf verschiedenen Werkzeugmaschinen, problematisch macht.

Eine Vorrichtung dieser Art ist in der US 6 123 341 A1 beschrieben. Eine ähnliche Lösung zeigt die US 7 654 178 B2. Für eine hydrostatische Waage offenbart die DE 1 048 108 A eine Druckübertragungsvorrichtung, die mit flexiblen Membranen arbeitet. Eine ähnliche Lösung zeigt die DE 645 770 A für eine lösbare Verbindung für die Anschlussleitungen von Manometern.

DE 20 2006 015 097 U1 offenbart eine Vorrichtung zur Aufnahme eines ring- oder scheibenförmigen Werkstücks auf einer Werkzeugmaschine, umfassend:
ein Aufnahmeoberteil (Palette) und ein Aufnahmeunterteil (Palettenträger),
wobei das Aufnahmeoberteil eine Anzahl um die Mittenachse herum angeordnete Betätigungselemente aufweist, wobei die Betätigungselemente durch Verdrängung eines Druckfluids betätigt werden, und hydraulische Übergabeelemente zwischen dem Ober- und Unterteil, wobei die Übertragungselemente bei verbundenem Aufnahmeoberteil und Aufnahmeunterteil an einer Fläche aneinander liegen, die der Trennebene zwischen Aufnahmeoberteil und Aufnahmeunterteil entspricht.

Der Erfindung liegt die **Aufgabe** zugrunde, eine Vorrichtung der eingangs genannten Art so auszubilden, dass es möglich ist, ring- oder scheibenförmige Werkstücke hochgenau zu spannen und dann an mehreren Bearbeitungsflächen in einer Aufspannung zu bearbeiten. Es soll also eine besonders präzise Bearbeitung des Werkstücks an mehreren Flächen möglich sein. Ferner soll es auch möglich sein, unterschiedliche Werkstücke hochgenau und wirtschaftlich bearbeiten zu können.

Die **Lösung** dieser Aufgabe durch die Erfindung sieht vor, dass die Vorrichtung umfasst:
ein Aufnahmeoberteil, welches zur Aufnahme des Werkstücks ausgebildet ist, und ein Aufnahmeunterteil, welches zur Aufnahme in der Werkzeugmaschine ausgebildet ist, wobei das Aufnahmeoberteil und das Aufnahmeunterteil koaxial zu einer Mittenachse lösbar miteinander verbindbar sind,
wobei das Aufnahmeoberteil eine Anzahl um die Mittenachse herum angeordnete Betätigungselemente aufweist, mit denen jeweils eine radial wirkende Kraft und/oder eine radiale Verschiebung auf das Werkstück ausgeübt werden kann, wobei die Betätigungselemente durch Verdrängung eines Druckfluids, insbesondere eines Hydrauliköls, betätigt werden,
wobei im Aufnahmeunterteil eine der Anzahl der Betätigungselemente entsprechende Anzahl an Aktoren angeordnet ist, mit denen jeweils ein definiertes Volumen an Druckfluid zu jeweils einem Übergabeelement gefördert werden kann, wobei eine der Anzahl der Betätigungselemente entsprechende Anzahl an Übergabeelementen vorhanden ist,
wobei jedes Übergabeelement einen im Aufnahmeoberteil angeordneten Abschnitt und einen im Aufnahmeunterteil angeordneten Abschnitt aufweist, wobei jeder Abschnitt jeweils einen Aufnahmeraum für Druckfluid aufweist, der von je einem Übertragungselement begrenzt wird, mit dem eine infolge der Verdrängung von Druckfluid bedingte Bewegung eines der Übertragungselemente auf das andere Übertragungselement übertragen kann, und
wobei die Übertragungselemente bei verbundenem Aufnahmeoberteil und Aufnahmeunterteil an einer Fläche aneinander liegen, die der Trennebene zwischen Aufnahmeoberteil und Aufnahmeunterteil entspricht.

Das vorgeschlagene spezielle Spannelement zur Aufnahme von ring- oder scheibenförmigen Werkstücken besteht also aus einem Unterteil, welches mit der Werkzeugmaschine und hier insbesondere mit einem Drehtisch derselben verbunden ist, und einem Oberteil, welches das Werkstück trägt. Zur präzisen Ausrichtung und Spannung des Werkstücks ist eine Anzahl Betätigungselemente vorgesehen, die vorzugsweise per Hydraulik (gegebenenfalls auch pneumatisch) arbeiten, wobei über die genannten Übertragungselemente eine vom (hydraulischen) Fluid verursachte Bewegung vom Unterteil zum Oberteil übertragen wird.

Ein wesentlicher Vorteil dieser Ausgestaltung ist, dass mehrere Aufnahmeoberteile mit unterschiedlichen Dimensionen und namentlich mit verschiedenen Durchmessern gefertigt und dann mit dem Aufnahmeunterteil kombiniert werden können, wozu die lösbare Befestigung zwischen Aufnahmeoberteil und Aufnahmeunterteil dient.

Die Übertragungselemente sind dabei bevorzugt als elastische Membranen ausgebildet. Die Membranen bestehen dabei bevorzugt aus einem elastomeren Material oder aus Metall. Dabei kann vorteilhaft ein sehr duktiler metallischer Werkstoff für die Membran zum Einsatz kommen.

Alternativ kann allerdings auch vorgesehen sein, dass die Übertragungselemente als Kolben ausgebildet sind, die im Aufnahmeraum verschieblich angeordnet sind. Die Kolben bestehen bevorzugt aus keramischem Material.

Im Aufnahmeoberteil sind mindestens 3 und bevorzugt bis zu 12 Betätigungselemente um die Mittenachse herum angeordnet, besonders bevorzugt 9 Betätigungselemente. Die Betätigungselemente sind dabei vorzugsweise äquidistant um die Mittenachse herum angeordnet.

Eine bevorzugte Weiterbildung sieht vor, dass eine der Anzahl der Betätigungselemente entsprechende Anzahl an lösbaren elektrischen Kontakten angeordnet sind, wobei ein Teil des elektrischen Kontakts im Aufnahmeoberteil und ein Teil des elektrischen Kontakts im Aufnahmeunterteil angeordnet ist. In jedem Betätigungselement kann in diesem Falle ein Drucksensor angeordnet sein, wobei ein dem Druck entsprechendes elektrisches Signal des Drucksensors über den elektrischen Kontakt vom Aufnahmeoberteil zum Aufnahmeunterteil übertragen werden kann.

Bevorzugt sind Zentriermittel angeordnet, mit dem das Aufnahmeoberteil relativ zum Aufnahmeunterteil zentriert werden kann. Die Zentriermittel können dabei als konisch zusammenwirkende Abschnitte ausgebildet sein.

Jedem Aktor ist vorzugsweise ein im Aufnahmeunterteil angeordneter elektronischer Controller zugeordnet. Dieser ist insbesondere für die geregelte Krafterzeugung bzw. Verschiebebewegung im Betätigungselement zuständig.

Das Aufnahmeoberteil weist bevorzugt eine Auflagefläche für das Werkstück auf, wobei im Bereich der Auflagefläche mindestens ein elektrischer Magnet angeordnet ist, mit dem das Werkstück auf oder an dem Aufnahmeoberteil fixiert werden kann. Dabei ist insbesondere jedem Betätigungselement ein elektrischer Magnet zugeordnet.

Die Vorrichtung ist bevorzugt auf einem Drehtisch der Werkzeugmaschine angeordnet ist, um um die Mittenachse rotieren zu können. Damit ist beispielsweise dann auch die Durchführung eines Drehvorgangs an einer Bohrungs- oder Planfläche möglich.

Die Betätigungselemente sind im Aufnahmeoberteil vorzugsweise lösbar befestigt. Damit besteht die Möglichkeit, sie modulartig auszutauschen und damit eine Anpassung an unterschiedliche Werkstücke leicht möglich zu machen.

Die Aktoren (Betätigungselemente) können auch in Form elastischer Membranen oder (keramischer) Kolben ausgebildet sein bzw. derartige Elemente aufweisen, d. h. die oben für das Übergabeelement beschriebene Technologie kann auch bei den Aktoren zum Einsatz kommen.

Im Regelfall ist es ausreichend, die Betätigungselemente in einer definierten axialen Höhe (bezogen auf die axiale Erstreckung des Werkstücks) um den Umfang des Werkstücks herum anzuordnen. Im Falle dessen, dass das Werkstück eine besonders große axiale Erstreckung aufweist, wenn also die Werkstücke beispielsweise rohrförmig ausgebildet sind (mit einer relativ großen axialen Erstreckung in Bezug auf den Durchmesser), kann vorteilhaft auch vorgesehen werden, dass zwei (oder auch mehr) Gruppen Betätigungselemente, die axial versetzt sind, angeordnet werden, um das Werkstück insoweit gleichzeitig an unterschiedlichen axialen Positionen mittels der Betätigungselemente zu kontaktieren bzw. zu spannen (im unten erläuterten Ausführungsbeispiel wären dann also 2 x 9 Betätigungselemente vorgesehen, wobei die zweiten neun Betätigungselemente zu den ersten neun Betätigungselementen (in Richtung der Mittenachse) axial versetzt angeordnet wären).

Mit der vorgeschlagenen Spannvorrichtung für ein ring- oder scheibenförmiges Werkstück können alle relevanten oder zumindest eine große Anzahl von Funktionsflächen feinbearbeitet werden. Dabei kommt für die Bearbeitung der Profilierung zumeist ein Schleifvorgang zum Einsatz. Die zylindrischen Bohrungsflächen und Planflächen können durch Drehen (Feindrehen) und gegebenenfalls anschließendes Rund- bzw. Planschleifen bearbeitet werden.

Die vorgeschlagene Vorrichtung kommt besonders vorteilhaft für die Bolzenringe von Zykloidengetrieben zum Einsatz.

Die Vorrichtung erlaubt es, bei guter Produktivität Werkstücke der genannten Art mit sehr hoher Präzision zu bearbeiten.

In den Zeichnungen ist ein Ausführungsbeispiel der Erfindung dargestellt. Es zeigen:
- Fig. 1: in perspektivischer Darstellung ein zu bearbeitendes Werkstück,
- Fig. 2: in perspektivischer Darstellung eine Vorrichtung zur Aufnahme des Werkstücks (ohne dargestelltes Werkstück),
- Fig. 3: einen Radialschnitt durch die Vorrichtung gemäß Figur 2 samt Werkstück und einem Teil einer Werkzeugmaschine, in der die Vorrichtung aufgenommen ist,
- Fig. 4: eine vergrößerte Darstellung eines Teils von Figur 3,
- Fig. 5: in perspektivischer Darstellung das Aufnahmeunterteil der Vorrichtung gemäß Figur 2,
- Fig. 6: die untere Auflagefläche des Aufnahmeoberteils der Vorrichtung gemäß Figur 2, mit der das Aufnahmeoberteil auf dem Aufnahmeunterteil aufliegt, und
- Fig. 7: eine schematische Darstellung der Steuerung der Vorrichtung gemäß Figur 2.

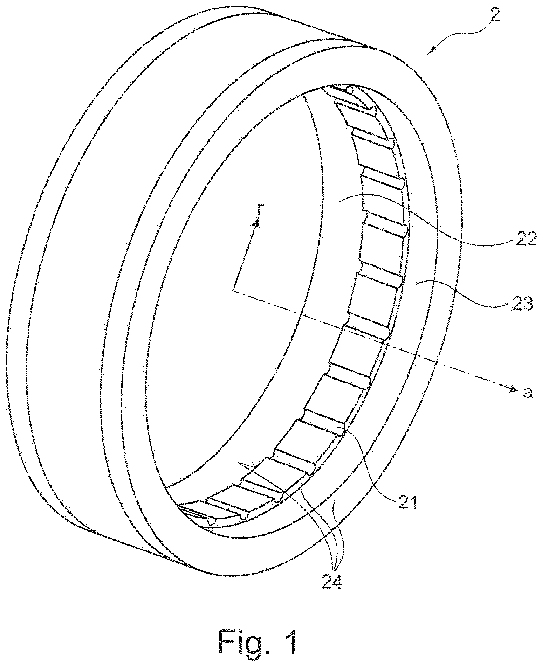

In Fig. 1 ist der Bolzenring 2 eines Zykloidengetriebes dargestellt, der mit der im weiteren beschriebenen Vorrichtung gespannt und dann auf einer Werkzeugmaschine feinbearbeitet werden soll. Der Bolzenring 2 hat eine Mittenachse a, die der Achse der im weiteren beschriebenen Vorrichtung entspricht. Hierzu erstreckt sich die radiale Richtung r.

Ziel ist es dabei, die Profilierung 21, die beiden zylindrischen Bohrungsflächen 22 und 23 sowie die Stirnfläche 24 in einer Aufspannung zu bearbeiten, so dass insoweit ein Umspannen des Werkstücks mit damit einhergehenden Genauigkeitsproblemen entbehrlich wird.

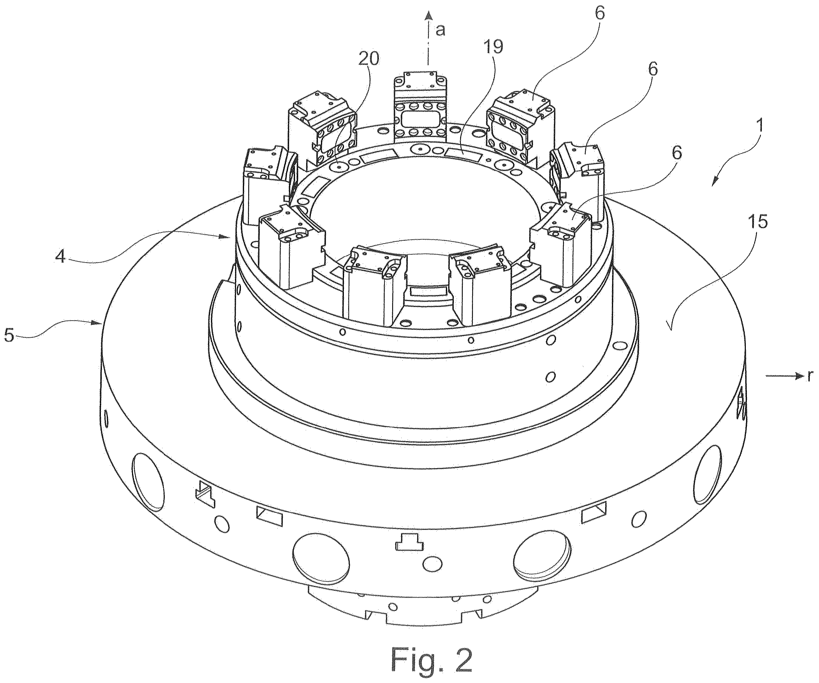

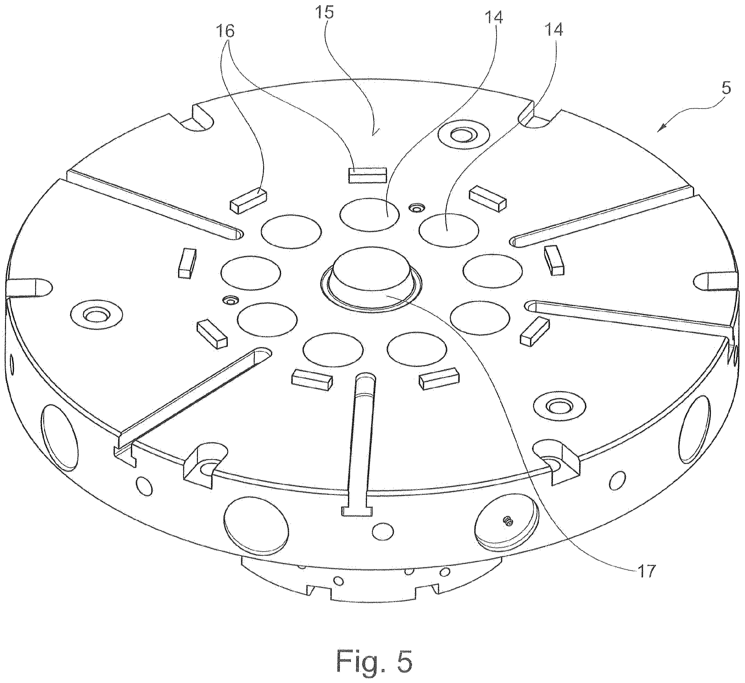

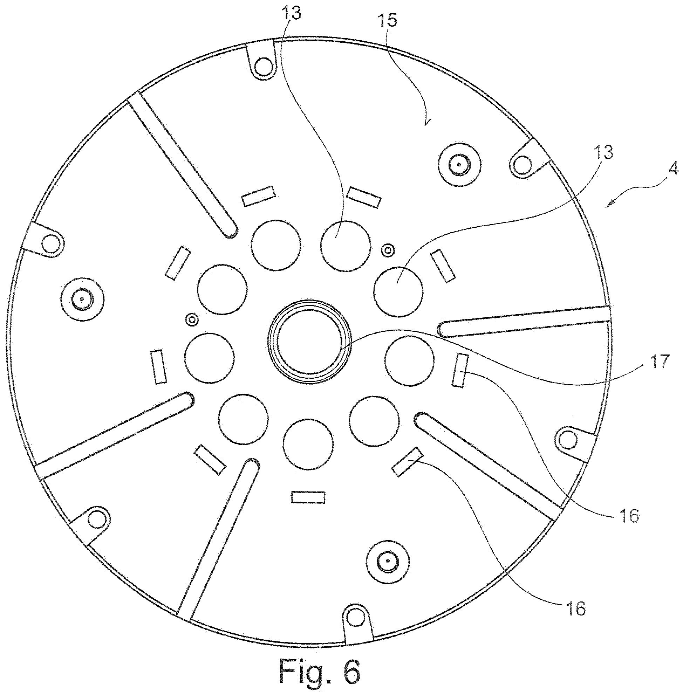

Hierfür kommt eine Vorrichtung 1 zum Einsatz, wie sie in den Figuren 2 bis 6 vollständig bzw. in Teilen dargestellt ist.

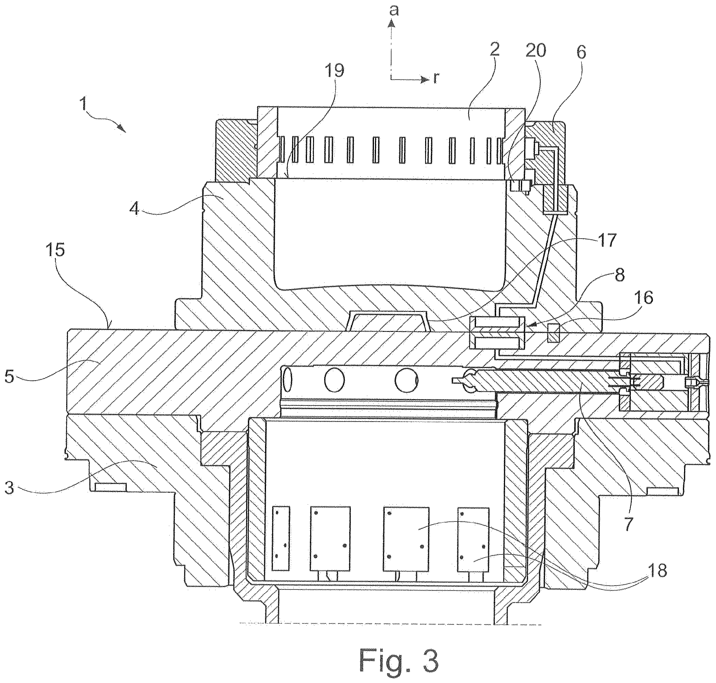

Die Vorrichtung 1 zum Aufnehmen und Spannen des Werkstücks 2 ist auf dem Maschinentisch (Drehtisch) einer Werkzeugmaschine 3 aufgenommen, wie es sich aus Figur 3 ergibt. Die Vorrichtung 1 hat ein Aufnahmeoberteil 4 und ein Aufnahmeunterteil 5, die zusammen die Vorrichtung 1 bilden. Das Aufnahmeunterteil 5 ist dabei mit dem Maschinentisch der Werkzeugmaschine 3 verbunden, während das Aufnahmeoberteil 4 koaxial zur Mittenachse a mit dem Aufnahmeunterteil 5 lösbar verbunden ist. Zentriermittel 17 (mit zusammenwirkenden Kegelabschnitten) stellen die Zentrierung in radiale Richtung r zwischen Aufnahmeoberteil 4 und Aufnahmeunterteil 5 sicher.

Die Lösbarkeit von Aufnahmeoberteil 4 und Aufnahmeunterteil 5 ermöglicht es, dass das Aufnahmeunterteil 5 in der Werkzeugmaschine 3 montiert bleibt und durch Austauschen des Aufnahmeoberteils 4 eine für ein spezielles Werkstück 2 geeignete Aufnahme auf dem Aufnahmeunterteil 5 montiert wird. Damit wird die Wirtschaftlichkeit der Bearbeitung wesentlich erhöht.

Zur Zentrierung des Werkstücks 2 bezüglich der Mittenachse a und zum Spannen desselben dienen Betätigungselemente 6, von denen eine Anzahl - im Ausführungsbeispiel neun - um die Mittenachse a herum angeordnet sind. Jedes Betätigungselement 6 arbeitet als autarkes hydraulisches Element, welches in radiale Richtung r eine Anlagekraft auf das Werkstück 2 bzw. einen radialen Verschiebeweg ausüben kann.

Zur Erzeugung besagter radialer Anlagekraft bzw. des radialen Verschiebewegs werden die Betätigungselemente 6 hydraulisch beaufschlagt, was mittels Aktoren 7 erfolgt, die im Aufnahmeunterteil 5 angeordnet sind. Eine translatorische Verschiebung des Aktors 7 führt zu einer Verdrängung von Hydrauliköl, welches letztlich zu einer Stellbewegung im Betätigungselement 6 führt.

Hierzu muss allerdings die Verdrängung von hydraulischem Fluid durch den Aktor 7 im Aufnahmeunterteil 5 auf das Aufnahmeoberteil 4 und hier auf die entsprechenden Betätigungselemente 6 übertragen werden.

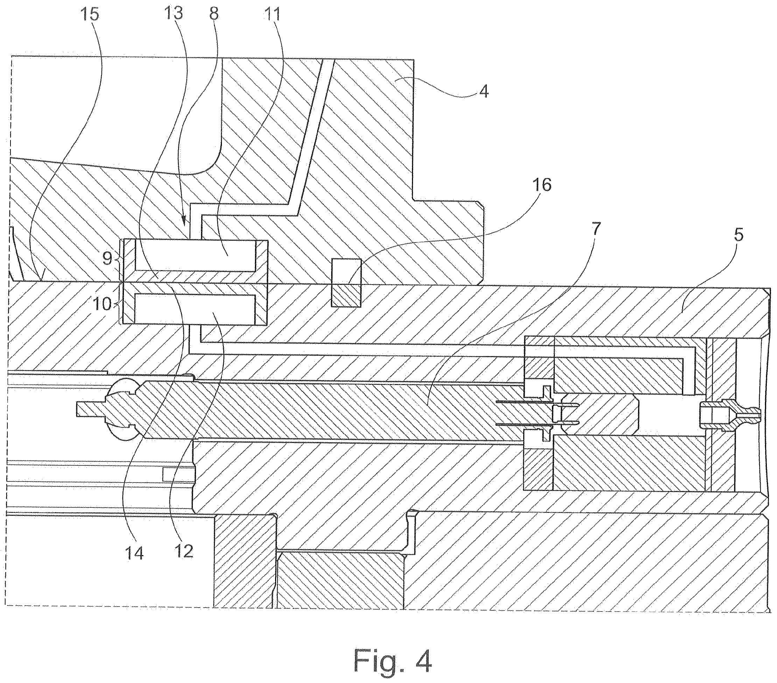

Hierfür dienen Übergabeelemente 8, wie sie im Detail in Figur 4 zu sehen sind.

Ein oberer Abschnitt 9 des Übergabeelements 8 befindet sich im Aufnahmeoberteil 4, während sich ein unterer Abschnitt 10 des Übergabeelements 8 im Aufnahmeunterteil 5 befindet. Jeder Abschnitt 9, 10 weist einen Aufnahmeraum 11 bzw. 12 für hydraulisches Fluid auf. Ferner wird der Aufnahmeraum 11 bzw. 12 jeweils durch ein Übertragungselement 13 bzw. 14 begrenzt. Die beiden Übertragungselemente 13 und 14 liegen dabei aneinander und in der Trendebene 15 zwischen dem Aufnahmeoberteil 4 und dem Aufnahmeunterteil 5 (s. Figur 4).

Durch die Übergabeelemente 8, deren Anzahl derjenigen der Betätigungselemente 6 und der Aktoren 7 entspricht, wird es möglich, die hydraulische Betätigung der Betätigungselemente 6 durch die Aktoren 7 vom Aufnahmeunterteil 5 zum Aufnahmeoberteil 4 zu übertragen, wobei jeweils hermetisch abgeschlossene Teilsysteme vorliegen und somit das hydraulische Fluid sowohl im Aufnahmeunterteil 5 als auch im Aufnahmeoberteil 4 jeweils abgeschlossen ist. Bohrungen im Aufnahmeoberteil 4 und im Aufnahmeunterteil 5, über die das Druckfluid (vom Aktor 7 bis in den Aufnahmeraum 12 bzw. vom Aufnahmeraum 11 bis zum Betätigungselement 6) geführt wird, sind nicht näher dargestellt. Ein hermetischer Abschluss ist insbesondere mit Blick auf das Aufnahmeunterteil allerdings nicht so zu verstehen, dass hier nicht gegebenenfalls ein Nachfülltank für Druckfluid vorhanden sein kann. Mit einem solchen können gegebenenfalls Leckagen des Aktors (d. h. des Verstellkolbens) ausgeglichen werden.

In jedem Betätigungselement 6 befindet sich ein (nicht dargestellter) Drucksensor, dessen elektrisches Signal vom Aufnahmeoberteil 4 zum Aufnahmeunterteil 5 übertragen werden muss. Hierzu dienen elektrische Kontakte 16, deren Anzahl wiederum derjenigen der Betätigungselemente 6 entspricht.

Zur Fixierung des Werkstücks 2 im bzw. am Aufnahmeoberteil 4 dienen elektrische Magneten 20, die im Bereich der Auflagefläche 19 für das Werkstück 2 angeordnet sind und somit in der Lage sind, das Werkstück 2 relativ zum Aufnahmeoberteil 4 zu fixieren.

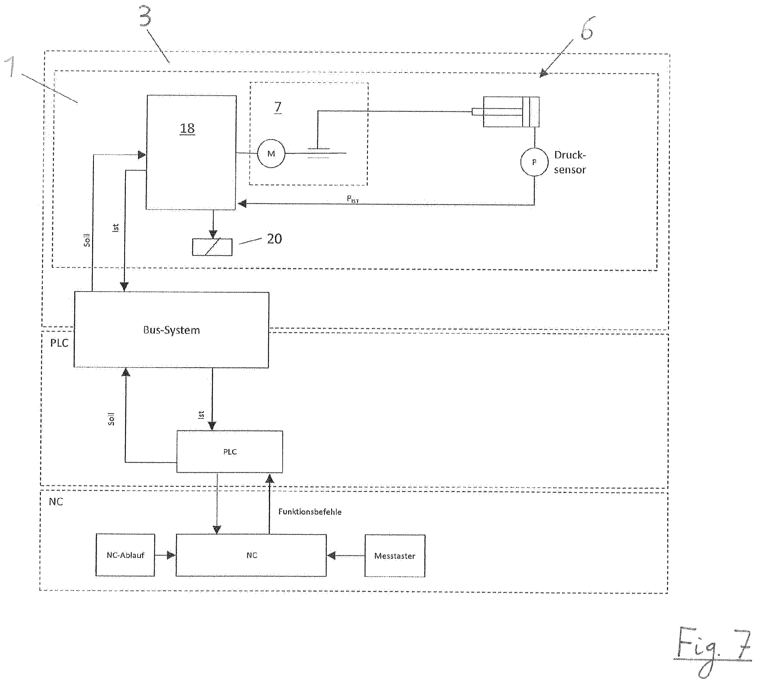

Im Aufnahmeunterteil 5 sind des weiteren elektronische Controller 18 angeordnet, deren Anzahl wiederum derjenigen der Betätigungselemente 6 entspricht. Die Controller 18 sind nur schematisch angedeutet. In Figur 7 findet sich eine schematische Darstellung der Steuerung der Vorrichtung 1 unter Einsatz besagter Controller.

Jeder der (im Ausführungsbeispiel: neun) Aktoren 7 (Linearaktoren) besitzt also einen eigenen Controller 18 im Spannfutter, was eine individuelle Positionierung eines einzelnen Aktors 7 durch die SPS (speicherprogrammierbare Steuerung) der Werkzeugmaschine möglich macht.

Die SPS ist mittels eines Bussystems mit den Controllern 18 verbunden. Es erfolgt die Bestimmung des Drucks in den Betätigungselementen 6 (Spannelementekammern) durch den bereits genannten und nicht dargestellten Drucksensor, der direkt vom zugehörigen Controller 18 erfasst wird.

Jedem einzelnen Betätigungselement 6 (Spannelement) ist ein elektrischer Magnet 20 zugeordnet. Die Ansteuerung geschieht über einen digitalen Ausgang des Aktor-Controllers.

Das Anlegen der Betätigungselemente 6 (Spannelemente) an das Werkstück 2 erfolgt druckgesteuert autark durch die SPS in Verbindung mit den Aktor-Controllern.

Beim Verschiebevorgang erfasst die NC-Steuerung der Werkzeugmaschine die Lage des Werkstücks 2 und berechnet die Verschiebewege der einzelnen Betätigungselemente 6 (Spannelemente). Diese Werte werden an die SPS weitergegeben, die einen Verfahrweg für die einzelnen Aktoren 7 bestimmt und diese entsprechend ansteuert. Als zusätzliche Regelgröße dient zumindest ein in der Werkzeugmaschine stationär montierter Messtaster, der die zu erreichende Endlage des Werkstücks 2 verifiziert.

Die vorgeschlagene Vorrichtung 1 erlaubt das Bearbeiten der Profilierung 21, der zylindrischen Bohrungsflächen 22 und 23 sowie der Stirnfläche 24 in einer Aufspannung, so dass ein hohes Maß an Präzision erzielt werden kann.

### Bezugszeichenliste:

- 1: Vorrichtung
- 2: Werkstück
- 3: Werkzeugmaschine (Maschinentisch)
- 4: Aufnahmeoberteil
- 5: Aufnahmeunterteil
- 6: Betätigungselement
- 7: Aktor
- 8: Übergabeelement
- 9: Abschnitt des Übergabeelements
- 10: Abschnitt des Übergabeelements
- 11: Aufnahmeraum
- 12: Aufnahmeraum
- 13: Übertragungselement (Membran, Kolben)
- 14: Übertragungselement (Membran, Kolben)
- 15: Trennebene zwischen Aufnahmeoberteil und Aufnahmeunterteil
- 16: elektrischer Kontakt
- 17: Zentriermittel
- 18: elektronischer Controller
- 19: Auflagefläche für das Werkstück
- 20: elektrischer Magnet
- 21: Profilierung
- 22: zylindrische Bohrungsfläche
- 23: zylindrische Bohrungsfläche
- 24: Stirnfläche

- a: Mittenachse
- r: radiale Richtung

## Patentansprüche

1. Vorrichtung (1) zur Aufnahme eines ring- oder scheibenförmigen Werkstücks (2) auf einer Werkzeugmaschine (3), umfassend:
ein Aufnahmeoberteil (4), welches zur Aufnahme des Werkstücks (2) ausgebildet ist, und ein Aufnahmeunterteil (5), welches zur Aufnahme in der Werkzeugmaschine (3) ausgebildet ist, wobei das Aufnahmeoberteil (4) und das Aufnahmeunterteil (5) koaxial zu einer Mittenachse (a) lösbar miteinander verbindbar sind,
wobei das Aufnahmeoberteil (4) eine Anzahl um die Mittenachse (a) herum angeordnete Betätigungselemente (6) aufweist, mit denen jeweils eine radial (r) wirkende Kraft und/oder eine radiale Verschiebung auf das Werkstück (2) ausgeübt werden kann, wobei die Betätigungselemente (6) durch Verdrängung eines Druckfluids, insbesondere eines Hydrauliköls, betätigt werden,
wobei im Aufnahmeunterteil (5) eine der Anzahl der Betätigungselemente (6) entsprechende Anzahl an Aktoren (7) angeordnet ist, mit denen jeweils ein definiertes Volumen an Druckfluid zu jeweils einem Übergabeelement (8) gefördert werden kann, wobei eine der Anzahl der Betätigungselemente (6) entsprechende Anzahl an Übergabeelementen (8) vorhanden ist,
wobei jedes Übergabeelement (8) einen im Aufnahmeoberteil (4) angeordneten Abschnitt (9) und einen im Aufnahmeunterteil (5) angeordneten Abschnitt (10) aufweist, wobei jeder Abschnitt (9, 10) jeweils einen Aufnahmeraum (11, 12) für Druckfluid aufweist, der von je einem Übertragungselement (13, 14) begrenzt wird, mit dem eine infolge der Verdrängung von Druckfluid bedingte Bewegung eines der Übertragungselemente (14) auf das andere Übertragungselement (13) übertragen kann, und
wobei die Übertragungselemente (13, 14) bei verbundenem Aufnahmeoberteil (4) und Aufnahmeunterteil (5) an einer Fläche aneinander liegen, die der Trennebene (15) zwischen Aufnahmeoberteil (4) und Aufnahmeunterteil (5) entspricht.

2. Vorrichtung nach Anspruch 1, **dadurch gekennzeichnet, dass** die Übertragungselemente (13, 14) als elastische Membranen ausgebildet sind, wobei die Membranen vorzugsweise aus einem elastomeren Material oder aus Metall bestehen.

3. Vorrichtung nach Anspruch 1, **dadurch gekennzeichnet, dass** die Übertragungselemente (13, 14) als Kolben ausgebildet sind, die im Aufnahmeraum (11, 12) verschieblich angeordnet sind, wobei die Kolben vorzugsweise aus keramischem Material bestehen.

4. Vorrichtung nach einem der Ansprüche 1 bis 3, **dadurch gekennzeichnet, dass** im Aufnahmeoberteil (4) zwischen 3 und 12 Betätigungselemente (6) um die Mittenachse (a) herum angeordnet sind, vorzugsweise zwischen 6 und 9 Betätigungselemente (6), wobei die Betätigungselemente (6) vorzugsweise äquidistant um die Mittenachse (a) herum angeordnet sind.

5. Vorrichtung nach einem der Ansprüche 1 bis 4, **dadurch gekennzeichnet, dass** eine der Anzahl der Betätigungselemente (6) entsprechende Anzahl an lösbaren elektrischen Kontakten (16) angeordnet sind, wobei ein Teil des elektrischen Kontakts im Aufnahmeoberteil (4) und ein Teil des elektrischen Kontakts im Aufnahmeunterteil (5) angeordnet ist.

6. Vorrichtung nach Anspruch 5, **dadurch gekennzeichnet, dass** in jedem Betätigungselement (6) ein Drucksensor angeordnet ist, wobei ein dem Druck entsprechendes elektrisches Signal des Drucksensors über den elektrischen Kontakt (16) vom Aufnahmeoberteil (4) zum Aufnahmeunterteil (5) übertragen werden kann.

7. Vorrichtung nach einem der Ansprüche 1 bis 6, **dadurch gekennzeichnet, dass** Zentriermittel (17) angeordnet sind, mit dem das Aufnahmeoberteil (4) relativ zum Aufnahmeunterteil (5) zentriert werden kann.

8. Vorrichtung nach einem der Ansprüche 1 bis 7, **dadurch gekennzeichnet, dass** jedem Aktor (7) ein im Aufnahmeunterteil (5) angeordneter elektronischer Controller (18) zugeordnet ist.

9. Vorrichtung nach einem der Ansprüche 1 bis 8, **dadurch gekennzeichnet, dass** das Aufnahmeoberteil (4) eine Auflagefläche (19) für das Werkstück (2) aufweist, wobei im Bereich der Auflagefläche (19) mindestens ein elektrischer Magnet (20) angeordnet ist, mit dem das Werkstück (2) auf oder an dem Aufnahmeoberteil (4) fixiert werden kann.

10. Vorrichtung nach Anspruch 9, **dadurch gekennzeichnet, dass** jedem Betätigungselement (6) ein elektrischer Magnet (20) zugeordnet ist.

11. Vorrichtung nach einem der Ansprüche 1 bis 10, **dadurch gekennzeichnet, dass** sie auf einem Drehtisch der Werkzeugmaschine (3) angeordnet ist, um um die Mittenachse (a) rotieren zu können.

12. Vorrichtung nach einem der Ansprüche 1 bis 11, **dadurch gekennzeichnet, dass** die Betätigungselemente (6) im Aufnahmeoberteil (4) lösbar befestigt sind.

## Claims

1. Device (1) for receiving an annular or disc-shaped workpiece (2) on a machine tool (3), comprising:
a upper receiving part (4), which is designed to receive the workpiece (2), and a lower receiving part (5), which is designed to be received in the machine tool (3), wherein the upper receiving part (4) and the lower receiving part (5) are detachably connected to one another coaxially to a central axis (a),
wherein the upper receiving part (4) has a number of actuating elements (6) arranged around the central axis (a), with each of which a radially acting force (r) and/or a radial displacement can be exerted on the workpiece (2), wherein the actuating elements (6) are actuated by displacement of a pressure fluid, in particular a hydraulic oil,
wherein a number of actuators (7) corresponding to the number of actuating elements (6) is arranged in the lower receiving part (5), with which in each case a defined volume of pressure fluid can be conveyed to in each case one transfer element (8), wherein a number of transfer elements (8) corresponding to the number of actuating elements (6) is present,
wherein each transfer element (8) has a section (9) arranged in the upper receiving part (4) and a section (10) arranged in the lower receiving part (5), wherein each section (9, 10) has in each case a receiving space (11, 12) for pressure fluid, which is delimited in each case by a transfer element (13, 14) with which a movement of one of the transfer elements (14) caused by the displacement of pressure fluid can be transferred to the other transfer element (13), and
wherein the transfer elements (13, 14) lie against one another, when the upper receiving part (4) and the lower receiving part (5) are connected, on a surface which corresponds to the parting plane (15) between the upper receiving part (4) and the lower receiving part (5).

2. Device according to claim 1, **characterized in that** the transfer elements (13, 14) are designed as elastic membranes, the membranes preferably consisting of an elastomeric material or of metal.

3. Device according to claim 1, **characterized in that** the transfer elements (13, 14) are designed as pistons which are displaceably arranged in the receiving space (11, 12), the pistons preferably consisting of ceramic material.

4. Device according to one of claims 1 to 3, **characterised in that** between 3 and 12 actuating elements (6) are arranged in the upper receiving part (4) around the central axis (a), preferably between 6 and 9 actuating elements (6), wherein the actuating elements (6) are preferably arranged equidistantly around the central axis (a).

5. Device according to one of claims 1 to 4, **characterised in that** a number of releasable electrical contacts (16) corresponding to the number of actuating elements (6) are arranged, wherein a part of the electrical contact is arranged in the upper receiving part (4) and a part of the electrical contact in the lower receiving part (5).

6. Device according to claim 5, **characterised in that** a pressure sensor is arranged in each actuating element (6), wherein an electrical signal of the pressure sensor corresponding to the pressure can be transmitted via the electrical contact (16) from the upper receiving part (4) to the lower receiving part (5).

7. Device according to one of claims 1 to 6, **characterised in that** centring means (17) are arranged by which the upper receiving part (4) can be centred relative to the lower receiving part (5).

8. Device according to one of claims 1 to 7, **characterized in that** each actuator (7) is assigned to an electronic controller (18) arranged in the lower receiving part (5).

9. Device according to one of claims 1 to 8, **characterised in that** the upper receiving part (4) has a support surface (19) for the workpiece (2), wherein in the region of the support surface (19) at least one electric magnet (20) is arranged, by which the workpiece (2) can be fixed on or to the upper receiving part (4).

10. Device according to claim 9, **characterised in that** an electric magnet (20) is assigned to each actuating element (6).

11. Device according to one of claims 1 to 10, **characterised in that** it is arranged on a rotary table of the machine tool (3) in order to be able to rotate about the central axis (a).

12. Device according to one of claims 1 to 11, **characterised in that** the actuating elements (6) are detachably fastened in the upper receiving part (4).

## Revendications

1. Dispositif (1) de réception d'une pièce à usiner (2) en forme d'anneau ou de disque sur une machine-outil (3), comprenant :
une partie supérieure de réception (4), qui est destinée à recevoir la pièce à usiner (2), et une partie inférieure de réception (5), qui est destinée à être reçue dans la machine-outil (3), dans lequel la partie supérieure de réception (4) et la partie inférieure de réception (5) peuvent être reliées l'une à l'autre de manière amovible, coaxialement par rapport à un axe central (a),
dans lequel la partie supérieure de réception (4) comporte un certain nombre d'éléments d'actionnement (6) disposés autour de l'axe central (a), avec lesquels une force agissant radialement (r) et/ou un déplacement radial peuvent être respectivement exercés sur la pièce à usiner (2), dans lequel les éléments d'actionnement (6) sont actionnés par le refoulement d'un fluide sous pression, en particulier d'une huile hydraulique,
dans lequel il est prévu dans la partie inférieure de réception (5) un nombre d'actionneurs (7) correspondant au nombre d'éléments d'actionnement (6), au moyen desquels un volume défini de fluide sous pression peut respectivement être acheminé vers un élément de transmission (8), dans lequel il est prévu un nombre d'éléments de transmission (8) correspondant au nombre d'éléments d'actionnement (6),
dans lequel chaque élément de transmission (8) comporte une section (9) disposée dans la partie supérieure de réception (4) et une section (10) disposée dans la partie inférieure de réception (5), dans lequel chaque section (9, 10) comporte un espace de réception (11, 12) pour le fluide sous pression, qui est délimité par un élément de transmission (13, 14) respectif, avec lequel un mouvement de l'un des éléments de transmission (14) provoqué par le déplacement du fluide sous pression peut être transmis à l'autre élément de transmission (13), et
dans lequel, lorsque la partie supérieure de réception (4) et la partie inférieure de réception (5) sont reliées, les éléments de transmission (13, 14) sont placés l'un contre l'autre sur une surface qui correspond au plan de séparation (15) entre la partie supérieure de réception (4) et la partie inférieure de réception (5).

2. Dispositif selon la revendication 1, **caractérisé en ce que** les éléments de transmission (13, 14) sont réalisés sous la forme de membranes élastiques, dans lequel les membranes sont de préférence constituées d'un matériau élastomère ou de métal.

3. Dispositif selon la revendication 1, **caractérisé en ce que** les éléments de transmission (13, 14) sont réalisés sous la forme de pistons qui sont disposés de manière à pouvoir être déplacés dans l'espace de réception (11, 12), dans lequel les pistons sont de préférence constitués d'un matériau céramique.

4. Dispositif selon l'une des revendications 1 à 3, **caractérisé en ce que**, dans la partie supérieure de réception (4), il est prévu entre 3 et 12 éléments d'actionnement (6) disposés autour de l'axe central (a), de préférence entre 6 et 9 éléments d'actionnement (6), dans lequel les éléments d'actionnement (6) sont de préférence disposés de manière équidistante autour de l'axe central (a).

5. Dispositif selon l'une des revendications 1 à 4, **caractérisé en ce qu'**il est prévu un nombre de contacts électriques amovibles (16) correspondant au nombre d'éléments d'actionnement (6), dans lequel une partie du contact électrique est disposée dans la partie supérieure de réception (4) et une partie du contact électrique est disposée dans la partie inférieure de réception (5).

6. Dispositif selon la revendication 5, **caractérisé en ce qu'**un capteur de pression est disposé dans chaque élément d'actionnement (6), dans lequel un signal électrique provenant du capteur de pression et correspondant à la pression peut être transmis par le contact électrique (16) de la partie supérieure de réception (4) à la partie inférieure de réception (5).

7. Dispositif selon l'une des revendications 1 à 6, **caractérisé en ce qu'**il est prévu des moyens de centrage (17) permettant de centrer la partie supérieure de réception (4) par rapport à la partie inférieure de réception (5).

8. Dispositif selon l'une des revendications 1 à 7, **caractérisé en ce qu'**un contrôleur électronique (18) disposé dans la partie inférieure de réception (5) est associé à chaque actionneur (7).

9. Dispositif selon l'une des revendications 1 à 8, **caractérisé en ce que** la partie supérieure de réception (4) présente une surface d'appui (19) pour la pièce à usiner (2), dans lequel il est prévu dans la zone de la surface d'appui (19) au moins un électro-aimant (20) au moyen duquel la pièce à usiner (2) peut être fixée sur ou à la partie supérieure de réception (4).

10. Dispositif selon la revendication 9, **caractérisé en ce qu'**un électro-aimant (20) est associé à chaque élément d'actionnement (6).

11. Dispositif selon l'une des revendications 1 à 10, **caractérisé en ce qu'**il est disposé sur une table tournante de la machine-outil (3) afin qu'il puisse tourner autour de l'axe central (a).

12. Dispositif selon l'une des revendications 1 à 11, **caractérisé en ce que** les éléments d'actionnement (6) sont fixés de manière amovible dans la partie supérieure de réception (4).
